# EUROPEAN PATENT APPLICATION

(11) **EP 4 729 680 A1**
(43) Date of publication of application: **22.04.2026**
(21) Application number: 24886305.2
(22) Date of filing: 31.10.2024
(51) Int. Cl.: D06F 34/08, D06F 37/30, D06F 37/38, D06F 33/32, D06F 103/46, D06F 103/24, D06F 105/50, D06F 105/46

(54) **WASHING MACHINE**

(30) Priority: 31.10.2023 JP 2023187075
(71) Applicant: Samsung Electronics Co., Ltd., Suwon-si, Gyeonggi-do 16677 (KR)
(72) Inventor: FUNAKOSHI, Hidekazu, Yokohama-shi, Kanagawa 230--0027 (JP); KATSUMOTO, Hiroshi, Yokohama-shi, Kanagawa 230--0027 (JP); HIKAMI, Tetsuya, Yokohama-shi, Kanagawa 230--0027 (JP); KAZAMA, Osamu, Yokohama-shi, Kanagawa 230--0027 (JP)
(74) Representative: Walaski, Jan Filip
(86) International application number: PCT/KR2024/016935
(87) International publication number: WO 2025/095633

(57) **Abstract**

A washing machine including a rotary drum that is rotatable, and into which laundry is loadable; a motor configured to rotate the rotary drum; and a controller configured to perform startup control to initiate rotation of the rotary drum, the startup control including a first process for controlling the motor so that torque for rotating the rotary drum in a first rotation direction is applied to the rotary drum; and a second process for controlling the motor so that, after the first process is initiated, and when a rotational acceleration of the rotary drum is less than or equal to a first predefined threshold before a rotation velocity of the rotary drum reaches a first rotation velocity, torque for rotating the rotary drum in reverse is applied to the rotary drum.

## Description

### Technical Field

The disclosure relates to a washing machine.

### Background Art

A washing machine, which is one of the typically owned home appliances, performs various laundry treatment processes. For example, the washing machine may perform laundry treatment processes such as washing, rinsing, detangling, and spin-drying. By utilizing potential energy in a rotating system including a rotary drum and laundry during each laundry treatment process, power consumption during a washing process may be reduced.

### Disclosure of Invention

### Solution to Problem

According to an embodiment of the disclosure, a washing machine includes a rotary drum that is rotatable, and into which laundry is loadable; a motor configured to rotate the rotary drum; and a controller configured to perform startup control to initiate rotation of the rotary drum, the startup control including a first process for controlling the motor so that torque for rotating the rotary drum in a first rotation direction is applied to the rotary drum; and a second process for controlling the motor so that, after the first process is initiated, and when a rotational acceleration of the rotary drum is less than or equal to a first predefined threshold before a rotation velocity of the rotary drum reaches a first rotation velocity, torque for rotating the rotary drum in reverse is applied to the rotary drum.

According to an embodiment of the disclosure, the controller may be configured to control the motor so that, in the second process, the rotary drum rotates in a second rotation direction that is opposite the first rotation direction.

According to an embodiment of the disclosure, the controller may be configured to end the startup control when the rotation velocity of the rotary drum reaches the first rotation velocity.

According to an embodiment of the disclosure, the controller may be configured to end the startup control and not perform the second process when, in the first process, the rotation velocity of the rotary drum reaches the first rotation velocity before the rotational acceleration of the rotary drum is less than or equal to the first predefined threshold.

According to an embodiment of the disclosure, the first predefined threshold may be the rotational acceleration of the rotary drum when the torque for rotating the rotary drum in the first rotation direction in the first process is not greater than a load torque of the rotary drum applied in a reverse direction of the first rotation direction.

According to an embodiment of the disclosure, the controller may be configured to perform torque control so that, when the rotational acceleration of the rotary drum is less than or equal to the first predefined threshold before the rotation velocity of the rotary drum reaches the first rotation velocity after the first process is initiated, the torque for rotating the rotary drum in reverse is a predefined torque value.

According to an embodiment of the disclosure, the predefined torque value may be a magnitude that causes the rotary drum to rotate in a second rotation direction that is opposite to the first rotation direction.

According to an embodiment of the disclosure, the predefined torque value may be a value in a range of 90 % or more of a maximum torque value that is outputtable from the motor.

According to an embodiment of the disclosure, the controller may be configured to perform control so that, when the rotation velocity of the rotary drum in the second process is greater than or equal to a predefined rotation velocity, the rotation velocity of the rotary drum in the second rotation direction is a second rotation velocity.

According to an embodiment of the disclosure, the controller may be configured to end the startup control when the rotation velocity of the rotary drum reaches the second rotation velocity.

According to an embodiment of the disclosure, the controller may be configured to initiate a control other than the startup control, while maintaining the rotation of the rotary drum, after the startup control is ended.

According to an embodiment of the disclosure, the controller may be configured to repeat the second process without ending the startup control when the rotation velocity of the rotary drum does not reach the second rotation velocity.

According to an embodiment of the disclosure, the controller may be configured to end the startup control when, due to the rotation velocity of the rotary drum not reaching the second rotation velocity, the second process is repeated without ending the startup control and a number of repetitions of the second process reaches a predefined number of times, the rotation velocity of the rotary drum reaches the second rotation velocity before the rotational acceleration of the rotary drum is less than or equal to a second predefined threshold after the second process is initiated, or a rotation direction of the rotary drum is set to a predefined rotation direction.

According to an embodiment of the disclosure, the controller may be configured to initiate the second process after a predefined time has elapsed after an end of the first process.

According to an embodiment of the disclosure, the rotary drum may be in a stopped state before the startup control to initiate the rotation of the rotary drum is performed.

A method of controlling a washing machine includes performing a first process for controlling a motor so that, during startup control, torque for rotating a rotary drum in a first rotation direction is applied to the rotary drum, and performing a second process for controlling the motor so that, after the first process is initiated, the rotary drum rotates in reverse when a rotational acceleration of the rotary drum is less than or equal to a first predefined threshold before a rotation velocity of the rotary drum reaches a first rotation velocity.

### Brief Description of Drawings

The above and other aspects, features, and advantages of certain embodiments of the disclosure will be more apparent from the following description, taken in conjunction with the accompanying drawings listed below.
FIG. 1 is a schematic diagram illustrating a configuration of a washing machine according to an embodiment of the disclosure.
FIG. 2 is a flowchart of an operation of a washing machine according to an embodiment of the disclosure.
FIG. 3 is a schematic diagram illustrating a load of a rotary drum according to an embodiment of the disclosure.
FIG. 4 is a flowchart of a startup control according to an embodiment of the disclosure.
FIG. 5 is a timing chart of a startup control according to an embodiment of the disclosure.
FIG. 6 is a flowchart of a startup control according to an embodiment of the disclosure.
FIG. 7 is a block diagram of a washing machine according to an embodiment of the disclosure.

### Mode for the Invention

An embodiment of the disclosure and terms as used therein is not intended to limit the technical features described in the disclosure to the embodiment of the disclosure and should be understood as including various modifications, equivalents, or alternatives of the embodiment of the disclosure.

In connection with the description of the drawings, like reference numbers may be used to denote like or related elements.

A singular form of a noun corresponding to an item may include one or more items, unless the relevant context clearly indicates otherwise.

In the disclosure, the expressions "A or B," "at least one of A and B," "at least one of A or B," "A, B, or C," "at least one of A, B, and C," and "at least one of A, B, or C" may include any one of the items listed in the corresponding expression or all possible combinations thereof.

The term "and/or" as used herein includes a combination of a plurality of related recited elements or any one of a plurality of related recited elements.

The terms "first," "second," etc. as used herein may be only used to distinguish one element from another and do not limit the elements in any other aspects (e.g., importance or order).

When a certain (e.g., first) element is referred to as being "coupled" or "connected" to another (e.g., second) element with or without the terms "functionally" or "communicatively," it means that the certain element may be coupled or connected to the other element directly (e.g., by wire) or wirelessly or through a third element.

The terms "comprise" or "include" as used herein are inclusive and therefore specify the presence of stated features, integers, steps, operations, elements, components, or combinations thereof, but do not preclude the presence or addition of one or more other features, integers, steps, operations, elements, components, or combinations thereof.

It will be understood that when an element is referred to as being "connected to," "coupled to," "supported to," or "in contact with" another element, the element may be "directly connected to, coupled to, supported to, or in contact with" the other element or may be "indirectly connected to, coupled to, supported to, or in contact with" the other element through a third element.

It will be understood that when an element is referred to as being located "on" another element, the element may be in contact with the other element, and another element may also be present between the two elements.

Hereinafter, an embodiment of the disclosure will be described in detail with reference to the accompanying drawings, so that those of ordinary skill in the art may easily carry out the disclosure. However, the disclosure may be implemented in various different forms and is not limited to the embodiment described herein. In order to clearly explain an embodiment of the disclosure, parts irrelevant to the description are omitted in the drawings, and the same or similar reference numerals are assigned to the same or similar parts throughout the disclosure.

According to an embodiment of the disclosure, in a control method of a washing machine that rotates a rotary drum with laundry loaded thereinto in a predefined direction by a motor, an observation operation may be performed before the rotating operation of the rotary drum is performed and an acceleration operation may be performed after the observation operation. In the observation operation, the stopped rotary drum may be rotated in a direction opposite to a set direction up to a preset observation reference angle. In the acceleration operation, the rotary drum may be rotated in the same direction as the existing rotating direction of the rotary drum up to a preset acceleration reference angle.

However, a load (load torque) applied to the motor that drives the rotary drum changes depending on the condition or weight of the laundry inside the rotary drum of the washing machine. Therefore, simply rotating the rotary drum to the observation angle may not effectively accumulate potential energy in a rotating system including the rotary drum and laundry, and thus, torque using the potential energy (torque for rotating the rotary drum in a direction opposite to the rotating direction in the observation operation) may not be effectively obtained.

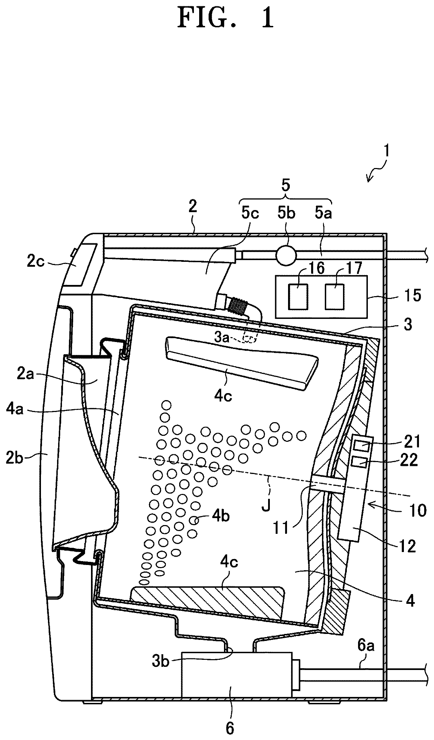

Therefore, in the disclosure, a washing machine capable of effectively accumulating potential energy before rotating a rotary drum in reverse may be provided. FIG. 1 is a schematic diagram illustrating a configuration of a washing machine according to an embodiment of the disclosure.

Referring to FIG. 1, a washing machine 1 according to an embodiment of the disclosure is disclosed. The washing machine 1 illustrated in FIG. 1 is a drum washing machine. However, the washing machine 1 according to the disclosure is not limited to a drum washing machine and may also be applied to a top loader washing machine in which a door is installed on the top and laundry is loaded from above. The washing machine 1 is a fully automatic washing machine that automatically performs a series of washing processes including washing, rinsing, and spin-drying. The washing machine 1 may include a case 2, a fixed tank 3, a rotary drum 4, a water supply device 5, a drain pump 6, a driver 10, and a controller 15.

In addition, in the following description, a direction in which the rotation axis extends is referred to as an "axial direction," a direction around the rotation axis is referred to as a "circumferential direction" or a "peripheral direction," and a direction perpendicular to the rotation axis (the direction of diameter or radius) is referred to as a "radial direction."

The case 2 of the washing machine 1 is a box-shaped container composed of panels or frames and constitutes the exterior of the washing machine 1. A circular load port 2a is formed at the front of the case 2 for loading or unloading laundry. A door 2b with a transparent window is attached to the load port 2a. The load port 2a is opened or closed by the door 2b. A manipulator 2c having a user-operated switch or the like may be installed above the load port 2a.

The fixed tank 3 communicating with the load port 2a may be installed inside the case 2. The fixed tank 3 may be a cylindrical, water-storable container with a bottom and may be connected to the load port 2a. The fixed tank 3 may be supported by a damper (not shown) installed inside the case 2 so as to be stable in a position where the center line (axis line) thereof is inclined upward from the horizontal. In other words, the fixed tank 3 may be disposed so that the axis line thereof follows a direction crossing a vertical direction.

The rotary drum 4 may be a cylindrical container with a diameter slightly smaller than a diameter of the fixed tank 3 and may be accommodated in the fixed tank 3 with the center line (axis line) thereof aligned with the center line (axis line) of the fixed tank 3. For example, the rotary drum 4 may be rotatable in a position where the center line (axis line) thereof is inclined upward from the horizontal. In other words, the rotary drum 4 may be disposed so that the axis line thereof follows a direction crossing a vertical direction. A circular opening 4a that in contact with the load port 2a may be formed at the front of the rotary drum 4. Laundry may be loaded into the rotary drum 4 through the load port 2a and the circular opening 4a.

A plurality of spin-drying holes 4b (only some spin-drying holes are illustrated in FIG. 1) may be formed on the side of the rotary drum 4 in all directions. In addition, a plurality of stirring lifters 4c may be attached to the inside of the side of the rotary drum 4. The front of the rotary drum 4 may be supported to the load port 2a in a rotatable state.

The water supply device 5 may be installed above the fixed tank 3. The water supply device 5 may have a water supply pipe 5a, a water supply valve 5b, and a detergent inlet portion 5c. An upper end of the water supply pipe 5a may protrude outward from the washing machine 1 and may be connected to a water supply source (not shown). A lower end of the water supply pipe 5a may be connected to a water supply port 3a located at the upper portion of the fixed tank 3. The detergent inlet portion 5c may accommodate detergents, such as liquid laundry soap or fabric softener, may mix the detergents with the supplied water, and may inject the resulting mixture into the fixed tank 3.

A drain 3b may be installed at the bottom of the fixed tank 3. The drain 3b may be connected to the drain pump 6. The drain pump 6 may discharge unnecessary water collected in the fixed tank 3 to the outside of the washing machine 1 through the drain pipe 6a. The drain pump 6 is an example of a drain that discharges water collected in the fixed tank 3.

The driver 10 may be attached below the fixed tank 3. According to an embodiment of the disclosure, the driver 10 may include a shaft 11 and a motor 12.

The shaft 11 may pass through the rear of the fixed tank 3 and protrude into the fixed tank 3. An end of the shaft 11 may be fixed to the lower center of the rotary drum 4. In other words, the rear of the rotary drum 4 may be supported by the shaft 11. The driver 10 may directly rotate the rotary drum 4. Accordingly, the rotary drum 4 may rotate around a rotation axis J by the driving of the motor 12.

For example, the rotation axis J may coincide with the center line of the fixed tank 3, the center line of the rotary drum 4, and the axis of the shaft 11. In addition, the rotation axis J may extend in a direction crossing the vertical direction (specifically, in a direction inclined with respect to the horizontal direction or in a substantially horizontal direction). The rotary drum 4 may rotate around the rotation axis J crossing the vertical direction.

According to an embodiment of the disclosure, the motor 12 may rotate the rotary drum 4. For example, the motor 12 may rotate the shaft 11 to rotate the rotary drum fixed to the end of the shaft 11. The motor 12 may include a stator (not shown) and a rotor (not shown) facing the stator with a predefined gap therebetween.

A plurality of motor coils (not shown) disposed in a circumferential direction may be installed in the stator of the motor 12. A plurality of magnets (not shown) disposed in a circumferential direction may be installed in the rotor of the motor 12. Current flow to the motor coil may be controlled by the controller 15. When current flows to the motor coil, a magnetic field that causes the motor to rotate may be generated. Specifically, when AC power is supplied to the motor coil, the magnetic field may be formed between the motor coil and the rotor. Due to the action of the magnetic field, the rotor may rotate around the rotation axis J.

According to an embodiment of the disclosure, the washing machine 1 may include at least one sensor. The at least one sensor may obtain various pieces of information used to control the operation of the washing machine 1. The information obtained by the at least one sensor may be used by the controller 15. According to an embodiment of the disclosure, the at least one sensor of the washing machine 1 may include a current sensor 21, a rotation angle sensor 22, and the like. The current sensor 21 may detect the current flowing to the motor 12 (specifically, the motor coil). The rotation angle sensor 22 may detect the rotation angle of the motor 12 (specifically, the rotor). For example, the rotation angle sensor 22 may include a Hall sensor.

According to an embodiment of the disclosure, the controller 15 may comprehensively control the operation of the washing machine 1. For example, the controller 15 may control the driver 10. According to an embodiment of the disclosure, the controller 15 may include a processor 16 and driving circuitry 17, but the disclosure is not limited thereto. The controller 15 may include only the processor 16. The controller 15 may further include memory as well as the processor 16 and the driving circuitry 17.

According to an embodiment of the disclosure, the processor 16 may be communicatively connected to each part of the washing machine 1 and may control each part of the washing machine 1. For example, the processor 16 may include memory that stores data and a program for operating the washing machine 1. The memory may store information (setting values such as thresholds) used to control the washing machine 1.

The processor 16 is a hardware device that controls the overall operation of the washing machine 1. The processor 16 is a hardware chip that includes integrated circuitry in which electric circuitries are integrated.

The processor 16 may include various processing circuitries and/or a plurality of processors. For example, the term "processor" as used herein, including the claims, may include various processing circuitries including at least one processor. One or more processors in the at least one processor may be configured to individually and/or collectively perform the various functions described herein in a distributed manner. As used herein, the "processor," "at least one processor," and "one or more processors" may be configured to perform various functions. However, these terms may include, without limitation, a situation where one processor performs some functions and other processor(s) perform other functions, and a situation where a single processor may perform all the functions. In addition, the at least one processor may include a combination of processors that perform the disclosed various functions in a distributed manner. The at least one processor may execute program instructions to accomplish or perform various functions. The processor 16 may execute programs stored in the memory to control various devices included in the washing machine 1. One or more processors 16 may be provided.

The driving circuitry 17 may receive power from a power source (not shown). In addition, the driving circuitry 17 may be electrically connected to the driver 10 and supply power to the driver 10. Accordingly, the driver 10 may be driven to rotate the rotary drum 4.

For example, the driving circuitry 17 may include motor driving circuitry (not shown). The motor driving circuitry may drive the motor 12 by supplying power to the motor coil installed in the stator of the motor 12. For example, the motor driving circuitry is inverter circuitry having a plurality of switching elements. The motor driving circuitry may convert DC power supplied from a DC power source (not shown) into AC power and supply the AC power to the motor coil by the switching operation of turning on and off the plurality of switching elements. For example, the DC power source may be a DC power source generated by converter circuitry that converts AC power supplied from a commercial power source (not shown) into DC power.

In addition, the switching operation of the motor driving circuitry may be controlled by the processor 16. For example, the processor 16 may control the switching operation of the motor driving circuitry by pulse width modulation (PWM) control.

In addition, the controller 15 may perform various controls such as startup control. The startup control is described in detail below.

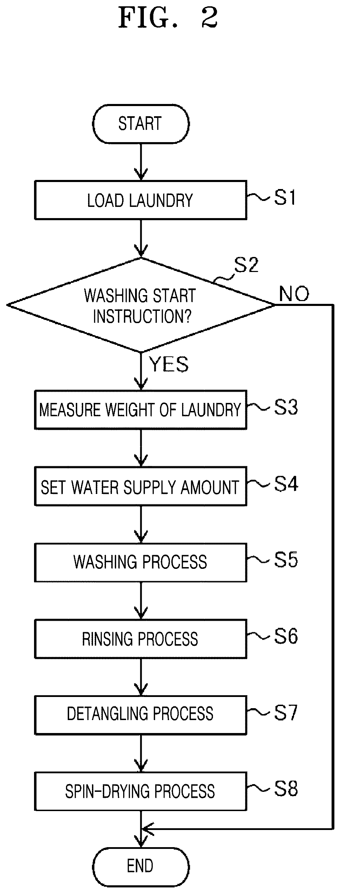

FIG. 2 is a flowchart of the operation of the washing machine according to an embodiment of the disclosure.

Referring to FIG. 2, in operation S1, laundry is loaded into the rotary drum 4. Detergent or the like may also be put into the detergent inlet portion 5c. The manipulator 2c may be operated to input a washing start instruction to the controller 15 (specifically, the processor 16) (YES in operation S2). Accordingly, the controller 15 may automatically initiate a series of washing processes including washing, rinsing, and spin-drying.

Before the washing process, the controller 15 may measure the weight of the laundry so as to set a water supply amount (operation S3). The controller 15 may set an appropriate water supply amount based on the measured weight of the laundry (operation S4).

When the setting of the water supply amount is completed, the controller 15 may initiate the washing process (operation S5). When the washing process is initiated, the controller 15 may control the water supply valve 5b to supply a set amount of water to the fixed tank 3. At this time, the detergent contained in the detergent inlet portion 5c may be put into the fixed tank 3 together with the supplied water. Next, the controller 15 may drive the driver 10 to initiate the rotation of the rotary drum 4.

When the washing process ends, the controller 15 may initiate the rinsing process (operation S6). In the rinsing process, the controller 15 may drive the drain pump 6. The washing water collected in the fixed tank 3 may be drained by driving the drain pump 6. Similar to the washing process, the controller 15 may perform a water supply or stirring process in the rinsing process.

When the rinsing process ends, the controller 15 may perform the detangling process (operation S7). In the detangling process, the controller 15 may control the water supply valve 5b to stop supplying water to the fixed tank 3. In addition, the controller 15 may drive the driver 10 to initiate the rotation of the rotary drum 4.

When the detangling process ends, the controller 15 may perform the spin-drying process (operation S8). In the spin-drying process, the rotary drum 4 may be rotated at high velocity for a predefined time. During the spin-drying process, the laundry may be stuck to the inner surface of the rotary drum 4 due to centrifugal force. Water contained in the laundry may flow out of the rotary drum 4. Thus, the laundry may be spin-dried. The water collected in the fixed tank 3 by spin-drying may be discharged by driving the drain pump 6.

When the spin-drying process ends, the controller 15 may notify the end of the washing process by sounding a buzzer (not shown). Of course, this is only an embodiment. For example, the controller 15 may notify a user terminal of the end of washing through communication. As the spin-drying process ends, the operation of the washing machine 1 may end.

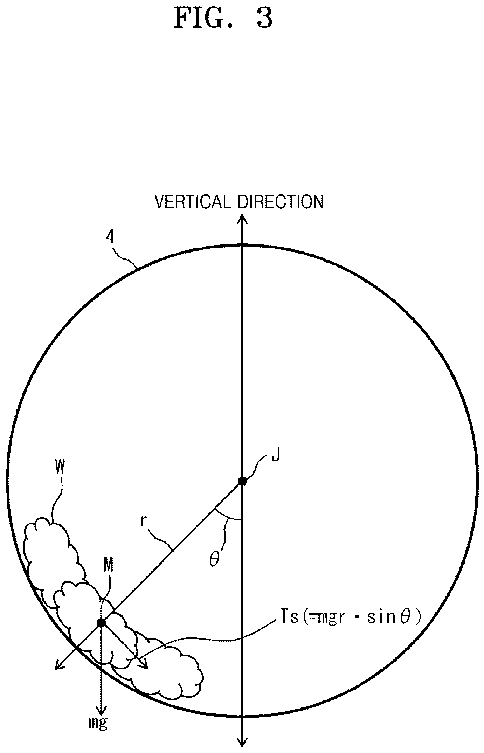

FIG. 3 is a schematic diagram illustrating the load of the rotary drum according to an embodiment of the disclosure.

Load torque Ts of the rotary drum 4 is described with reference to FIG. 3. It is assumed that m is the total weight of the laundry W including water, g is the acceleration of gravity, r is the weight center distance, which is the distance between the center (rotation axis J) of the rotary drum 4 and the weight center M of the laundry W inside the rotary drum 4, and θ is the weight center angle, which is the angle between a straight line connecting the weight center (rotation axis J) of the rotary drum 4 to the weight center M and a straight line extending in the vertical direction (specifically, a straight line extending vertically downward from the weight center of the rotary drum 4). At this time, the load torque Ts is equal to "mgr·sinθ." In addition, the weight center M of the laundry W corresponds to the weight center of the rotating system including the rotary drum 4 and the laundry W.

As such, the load torque Ts changes according to the total weight m of the laundry W, the weight center distance r, and the weight center angle θ. As the total weight m of the laundry W increases, the load torque Ts may increase. As the weight center distance r of the laundry W increases, the load torque Ts may increase. As the weight center angle θ of the laundry W approaches 90°, the load torque Ts may increase.

In addition, in order to rotate the stopped rotary drum 4 in one direction, the 'torque for rotating the rotary drum 4 in a predefined direction', which is applied to the rotary drum 4, is required to be greater than the 'load torque Ts (torque acting in the reverse direction with respect to the predefined direction)'.

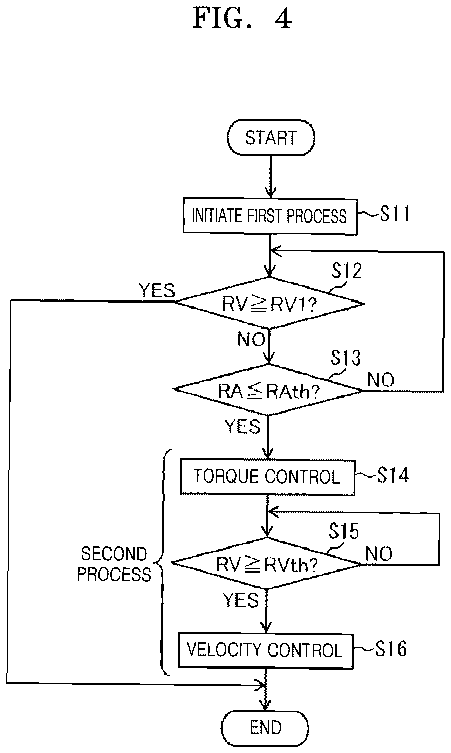

FIG. 4 is a flowchart of a startup control according to an embodiment of the disclosure.

Next, the startup control performed by the controller 15 is described. The startup control is a control for initiating the rotation of the rotary drum 4. For example, the startup control is performed at the initiation of the spin-drying process. According to an embodiment of the disclosure, the controller 15 may perform a first process and a second process in the startup control.

In the first process according to an embodiment of the disclosure, the controller 15 may control the motor 12 so that the torque for rotating the rotary drum 4 in a predefined rotation direction is applied to the stopped rotary drum 4. The controller 15 may end the first process and perform the second process when the rotational acceleration of the rotary drum 4 is less than or equal to a predefined threshold before the rotation velocity of the rotary drum 4 reaches a first predefined rotation velocity (speed) after the first process is initiated.

In the second process according to an embodiment of the disclosure, the controller 15 may control the motor 12 so that the rotary drum 4 rotates in reverse (so as to rotate in the reverse direction of the rotation direction in the first process). In addition, the controller 15 may end the startup control when the rotation velocity of the rotary drum 4 reaches a first rotation velocity before the rotational acceleration of the rotary drum 4 is less than or equal to the predefined threshold in the first process.

According to an embodiment of the disclosure, when the second process is initiated, the controller 15 may control the motor 12 so that the torque applied to the rotary drum 4 is predefined torque so as to rotate the rotary drum 4 in reverse. When the rotation velocity of the rotary drum 4 reaches the predefined rotation velocity in the second process, the controller 15 may control the motor 12 so that the rotation velocity of the rotary drum 4 is a second predefined rotation velocity (speed).

Next, the startup control is described with reference to FIG. 4. When the startup control is initiated, the controller 15 may perform the following processes. The process of operations S14 to S16 corresponds to a second process.

In operation S11, the controller 15 may initiate a first process. According to an embodiment of the disclosure, the controller 15 may perform velocity control for rotating the rotary drum 4 in a predefined rotation direction as the first process. In the velocity control, the controller 15 may control the motor 12 so that a rotation velocity RV of the rotary drum 4 is a first predefined rotation velocity RV1. For example, the first rotation velocity RV1 may be set as a target rotation velocity of the rotary drum 4 in the control performed after the startup control.

According to an embodiment of the disclosure, the controller 15 (the processor 16) may obtain the rotation velocity of the motor 12, based on the temporal change in the rotation angle of the motor 12 (specifically, the rotor) detected by the rotation angle sensor 22. In this example, the rotation velocity RV of the rotary drum 4 is equal to the rotation velocity of the motor 12. As such, the controller 15 may determine the rotation velocity RV of the rotary drum 4, based on the detection result of the rotation angle sensor 22.

In the velocity control of the first process, the controller 15 (the processor 16) may determine a rotation velocity command value RV*. The rotation velocity command value RV* in the velocity control of the first process indicates the first (predefined) rotation velocity RV1, which is the target rotation velocity in the velocity control of the first process.

In addition, in the velocity control of the first process, the controller 15 may determine a current command value (a target current value of a current flowing through the motor 12) so that the difference between the rotation velocity RV (actual velocity) of the rotary drum 4 and the first rotation velocity RV1 (command value) is small. The controller 15 (the processor 16) may control the switching operation of the driving circuitry 17 to control the power supplied to the motor 12, so that the 'current value of the current flowing through the motor 12 (specifically, the motor coil)' detected by the current sensor 21 approaches the current command value, that is, there is no difference between the current value of the current flowing through the motor 12 and the current command value.

When the first process is initiated in this manner, operation S12 may be performed.

In operation S12, the controller 15 may determine whether the rotation velocity RV of the rotary drum 4 is greater than or equal to the first predefined rotation velocity RV1. When the rotation velocity RV of the rotary drum 4 is not greater than or equal to the first rotation velocity RV1, operation S13 may be performed.

On the other hand, when the rotation velocity RV of the rotary drum 4 reaches the first rotation velocity RV1, the controller 15 may end the startup control. While the rotation of the rotary drum 4 is maintained, the following control (e.g., the control for the spin-drying process) may be initiated.

In operation S13, when the rotation velocity RV of the rotary drum 4 is not greater than or equal to the first rotation velocity RV1, the controller 15 may determine whether the rotational acceleration RA of the rotary drum 4 is less than or equal to a predefined threshold RAth. When the rotational acceleration RA of the rotary drum 4 is less than or equal to the threshold RAth, operation S14 may be performed; otherwise, operation S12 may be performed.

The threshold RAth may be set to the rotational acceleration of the rotary drum 4 when the torque applied to the rotary drum 4 in the first process (the torque for rotating the rotary drum 4 in the predefined rotational direction) is not greater than the load torque of the rotary drum 4. For example, the threshold RAth may be set to zero, but the disclosure is not limited thereto.

In addition, in a case where the threshold RAth is excessively great in a positive direction, even when the rotary drum 4 may be rotated once in the first process, it may be in a state in which the second process is performed (a state in which the second process is performed more than necessary). In addition, in a case where the threshold RAth is excessively great in a negative direction, it may be in a state of being unable to normally perform the startup control (a state of being unable to initiate the second process when it is necessary to perform the second process). Taking the above into account, the threshold RAth may be set to an appropriate value. The threshold may be set to zero as described above, but may also be set to any suitable positive value, for example, an acceleration in which 10 % of the rated velocity of the motor changes within 1 second.

Specifically, the controller 15 (the processor 16) may derive the rotational acceleration RA of the rotary drum 4, based on the temporal change in the rotation velocity RV of the rotary drum 4. For example, the controller 15 may obtain the rotational acceleration RA of the rotary drum 4 by differentiating the rotation velocity RV of the rotary drum 4 with respect to time.

In operation S14, when the rotation velocity RV of the rotary drum 4 is not greater than or equal to the first rotation velocity RV1 and the rotational acceleration RA of the rotary drum 4 is less than or equal to the threshold RAth, the controller 15 may perform torque control for rotating the rotary drum 4 in reverse. In the torque control, the controller 15 may control the motor 12 so that the torque applied to the rotary drum 4 so as to rotate the rotary drum 4 in reverse has a predefined torque value (a predefined value). The predefined torque value may be set to a magnitude that causes the rotary drum 4 to reliably rotate in the reverse direction. For example, the predefined torque value may be set to a maximum torque value (a maximum value), but the disclosure is not limited thereto. For example, the predefined torque value may be a value in a range of 80 % or more of the maximum torque value that may be outputtable from the motor.

Specifically, in the torque control of the second process, the controller 15 (the processor 16) may determine a torque command value. The torque command value in the torque control of the second process indicates a predefined torque value (a predefined value), which is the target torque in the torque control of the second process.

In addition, in the torque control of the second process, the controller 15 may determine a current command value (a target current value of a current flowing through the motor 12), based on the torque command value. For example, as the torque command value increases, the current command value may increase. The controller 15 (the processor 16) may control the switching operation of the driving circuitry 17 to control the power supplied to the motor 12, so that the 'current value of the current flowing through the motor 12 (specifically, the motor coil)' detected by the current sensor 21 approaches the current command value.

When the torque control is initiated in this manner, operation S15 may be performed.

In operation S15, the controller 15 may determine whether the rotation velocity RV of the rotary drum 4 is greater than or equal to a predefined rotation velocity RVth. When the rotation velocity RV of the rotary drum 4 is greater than or equal to the predefined rotation velocity RVth (when the rotation velocity RV of the rotary drum 4 reaches the predefined rotation velocity RVth), operation S16 may be performed; otherwise, operation S15 may be performed.

In operation S16, when the rotation velocity RV of the rotary drum 4 is greater than or equal to the predefined rotation velocity RVth, the controller 15 may perform velocity control for rotating the rotary drum 4 in a second rotation direction, which is the reverse rotation direction (a reverse direction of the rotation direction in the first process). In the velocity control, the controller 15 may control the motor 12 so that the rotation velocity RV of the rotary drum 4 is a second rotation velocity RV2. The second rotation velocity RV2 may be equal to or different from the first rotation velocity RV1. For example, the second rotation velocity RV2 may be set as a target rotation velocity of the rotary drum 4 in the control performed after the startup control.

Specifically, in the velocity control of the second process, the controller 15 (the processor 16) may determine a rotation velocity command value RV*. The rotation velocity command value RV* in the velocity control of the second process indicates the second rotation velocity RV2, which is the target rotation velocity in the velocity control of the second process.

In the velocity control of the second process, the controller 15 may determine a current command value (a target current value of a current flowing through the motor 12) so that the difference between the rotation velocity RV (actual velocity) of the rotary drum 4 and the second rotation velocity RV2 (command value) is small. The controller 15 (the processor 16) may control the switching operation of the driving circuitry 17 to control the power supplied to the motor 12, so that the 'current value of the current flowing through the motor 12 (specifically, the motor coil)' detected by the current sensor 21 approaches the current command value.

When the rotation velocity RV of the rotary drum 4 reaches the second rotation velocity RV2, the controller 15 may end the startup control. The controller 150 may initiate control (e.g., control for the spin-drying process) other than the startup control while maintaining the rotation of the rotary drum 4.

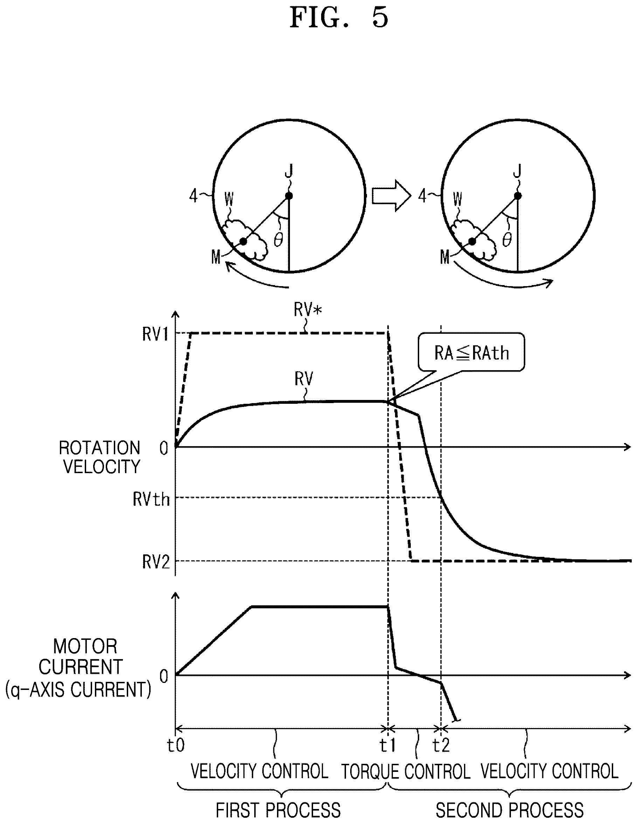

FIG. 5 is a timing chart of a startup control according to an embodiment of the disclosure.

Referring to FIG. 5, a processing timing in a startup control is illustrated.

At time t0, the controller 15 may initiate a first process. In the first process, the controller 15 may control the motor 12 so that the rotation velocity RV of the rotary drum 4 is a first rotation velocity RV1 (a rotation velocity command value RV*). Thus, the rotation velocity RV of the rotary drum 4 may gradually increase toward the first rotation velocity RV1.

In addition, the torque (the torque generated by the motor 12) for rotating the rotary drum 4 in the predefined direction (e.g., clockwise) is not greater than the load torque of the rotary drum 4. Therefore, in a period from time t0 to time t1, the rotational acceleration RA of the rotary drum 4 may gradually decrease.

In addition, in a period from time t0 until the rotational acceleration RA of the rotary drum 4 is less than or equal to the threshold RAth (zero in the example of FIG. 5), the rotary drum 4 may rotate in a predefined rotation direction (clockwise in the example of FIG. 5). Accordingly, the weight center angle θ gradually increases until the rotational acceleration RA of the rotary drum 4 is less than or equal to the threshold RAth, and potential energy according to the weight center angle θ gradually accumulates in the rotating system including the rotary drum 4 and the laundry W.

At time t1, the controller 15 may determine that the rotational acceleration RA of the rotary drum 4 is less than or equal to the threshold RAth before the rotation velocity RV of the rotary drum 4 reaches the first rotation velocity RV1. Then, the controller 15 may end the first process.

When the first process ends, the application of the torque for rotating the rotary drum 4 in a predefined rotation direction (clockwise in the example of FIG. 5) may be released. Accordingly, the torque according to the potential energy accumulated in the rotating system including the rotary drum 4 and laundry W begins to be applied to the rotary drum 4. The torque according to the potential energy is torque for rotating the rotary drum 4 in the reverse direction of the predefined rotation direction (counterclockwise in the example of FIG. 5). As the torque according to the potential energy is applied to the rotary drum 4, the rotary drum 4 may rotate in the reverse rotation direction (counterclockwise).

In the second process, the controller 15 may initiate the control of the motor 12, based on the rotation angle (magnet position) of the motor 12 at the time at which the second process is initiated. Accordingly, the torque for rotating the rotary drum 4 in the reverse direction may be accurately generated.

In addition, when the second process is initiated in the example of FIG. 5, the controller 15 may perform the torque control. In the torque control, the controller 15 may control the motor 12 so that the torque applied to the rotary drum 4 (the torque for rotating the rotary drum 4 in the reverse rotation direction) is the predefined torque (the maximum torque in the example of FIG. 5). Accordingly, the reverse rotation (the rotation in the reverse direction) of the rotary drum 4 may be promoted.

At time t2, the controller 15 may determine that the rotation velocity of the rotary drum 4 is greater than or equal to the predefined rotation velocity RVth. Then, the controller 15 may end the torque control of the second process and initiate the velocity control of the second process. In the velocity control of the second process, the controller 15 may control the motor 12 so that the rotation velocity RV of the rotary drum 4 is the second rotation velocity RV2 (the rotation velocity command value RV*). Thus, the rotation velocity RV of the rotary drum 4 may gradually increase toward the second rotation velocity RV2.

Next, the embodiment of the disclosure is compared with a comparative example. Hereinafter, for convenience of explanation, the same reference numerals assigned to components in the embodiment of the disclosure are used in the description of components in the comparative example. In addition, in the washing machine according to the comparative example in the following description, after an observation process in which the motor 12 is controlled so that the stopped rotary drum 4 rotates in a predefined rotation direction by a predefined angle, an acceleration process is performed to rotate the rotary drum 4 in reverse by the torque according to the potential energy accumulated in the rotating system including the rotary drum 4 and the laundry W.

As described above, the load (the load torque Ts) of the rotary drum 4 changes according to the condition or weight of the laundry W inside the rotary drum 4. Therefore, as in the observation process in the comparative example, simply rotating the stopped rotary drum 4 in the predefined rotation direction by the predefined angle does not effectively accumulate potential energy in the rotating system including the rotary drum 4 and the laundry W. As a result, there are cases where the torque using the potential energy (the torque for rotating the rotary drum 4 in the reverse direction) may not be effectively obtained.

For example, when the upper limit of the rotation angle at which the stopped rotary drum 4 is actually rotatable in a predefined rotation direction by the motor 12 in the observation process is set as an 'upper limit angle', there are cases where the upper limit angle is greater than a predefined angle in the observation process of the comparative example when the load of the rotary drum 4 is relatively small. In this case, the potential energy accumulated in the rotating system in the observation process of the comparative example is less than the potential energy that may be actually accumulated in the rotating system.

In addition, when the load of the rotary drum 4 is relatively small, there are cases where the stopped rotary drum 4 may be rotated once in the predefined rotation direction just by the torque applied to the rotary drum 4 (the torque generated by the motor 12) in the observation process of the comparative example. However, in the comparative example, even in this case, the stopped rotary drum 4 is not rotated once in the predefined rotation direction and the acceleration process is performed after the stopped rotary drum 4 is rotated by the predefined angle in the predefined rotation direction. Accordingly, the time required for startup control may not be shortened.

In addition, when the load of the rotary drum 4 is relatively large, there are cases where the position of the weight center M of the laundry W may descend due to the collapse (scattering) of the laundry W by gravity before the rotation angle (the angle corresponding to the weight center angle θ) of the rotary drum 4 reaches the upper limit angle in the process of rotating the stopped rotary drum 4 in the predefined rotation direction. In this case, the upper limit angle changes during the operation in which the stopped rotary drum 4 rotates in the predefined rotation direction. For example, the upper limit angle after the laundry W collapses is greater than the upper limit angle before the laundry W collapses.

In addition, whether the laundry will collapse (scatter) depends on the condition of the laundry W, such as the water absorption amount of the laundry W or the tangled state of the laundry W. Thus, it is difficult for the controller 15 to determine whether the laundry will collapse simply by measuring the amount of laundry. Accordingly, in the comparative example, because the predefined angle in the observation process is set to a 'rotation angle at which the laundry W does not collapse', it is difficult to effectively accumulate potential energy (e.g., accumulate the maximum potential energy) in the rotating system.

On the other hand, in the washing machine 1 according to the embodiment of the disclosure, the controller 15 may manage the end of the first process (the process for rotating the stopped rotary drum 4 in the predefined rotation direction) based on the rotation velocity RV of the rotary drum 4 and the rotational acceleration RA of the rotary drum 4, and thus, perform the first process by taking into account the load torque state of the rotary drum 4. For example, as the load torque of the rotary drum 4 decreases with respect to the torque applied to the rotary drum 4 in the first process (the torque for rotating the rotary drum 4 in the predefined rotational direction), the time from 'the time at which the first process is initiated' to 'the time at which the rotational acceleration RA of the rotary drum 4 is less than or equal to the threshold RAth before the rotation velocity RV of the rotary drum 4 reaches the first rotation velocity RV1' increases.

As such, the washing machine 1 according to an embodiment of the disclosure may perform the first process by taking into account the load torque state of the rotary drum 4, and thus, may effectively accumulate potential energy in the rotating system including the rotary drum 4 and the laundry W in the first process. For example, as the load torque of the rotary drum 4 decreases, the washing machine 1 may increase the rotation angle (the angle corresponding to the weight center angle θ) for rotating the stopped rotary drum 4 in the predefined rotation direction in the first process. Accordingly, the potential energy accumulated in the rotating system in the first process may increase.

In addition, in the washing machine 1 according to an embodiment of the disclosure, when the rotation velocity RV of the rotary drum 4 reaches the first rotation velocity RV1 before the rotational acceleration RA of the rotary drum 4 is less than or equal to the threshold RAth, the startup control may end. Accordingly, because the second process may be omitted when the second process is unnecessary in the startup control, the time required for the startup control may be shortened.

In addition, the washing machine 1 according to an embodiment of the disclosure may effectively accumulate potential energy in the rotating system in the first process even when the position of the weight center M of the laundry W changes due to the collapse of the laundry W in the first process when the load of the rotary drum 4 is relatively large.

As described above, in the startup control, the controller 15 of the washing machine 1 according to an embodiment of the disclosure may end the first process and initiate the second process when the rotational acceleration RA of the rotary drum 4 is less than or equal to the predefined threshold before the rotation velocity of the rotary drum 4 reaches the first predefined rotation velocity after the first process is initiated.

In the above example, because the controller 15 may perform the first process by taking into account the load torque state of the rotary drum 4, potential energy may be effectively accumulated in the rotating system including the rotary drum 4 and the laundry W in the first process. As such, the torque using the potential energy in the second process (the torque for rotating the rotary drum 4 in the reverse direction to the rotation direction in the first process) may be effectively obtained.

In addition, in the embodiment of the disclosure, large potential energy (e.g., the maximum potential energy) may be accumulated in the rotating system in the first process, compared to the comparative example, torque using the large potential energy may be obtained in the second process. Accordingly, in the embodiment of the disclosure, the washing machine 1 may reduce the torque required for the motor 12 (the torque required to rotate the stopped rotary drum 4), compared to the comparative example. Accordingly, the motor 12 may be miniaturized.

In the washing machine 1 according to an embodiment of the disclosure, the controller 15 may end the startup control when the rotation velocity of the rotary drum 4 reaches the first rotation velocity before the rotational acceleration of the rotary drum 4 is less than or equal to the threshold in the first process. In this configuration, because the second process (the process for rotating the rotary drum 4 in reverse) may be omitted in the startup control when the second process is unnecessary, the time required for the startup control may be shortened.

When the second process is initiated, the controller 15 of the washing machine 1 according to an embodiment of the disclosure may control the motor 12 so that the torque applied to the rotary drum 4 is predefined torque so as to rotate the rotary drum 4 in reverse. In the second process according to an embodiment of the disclosure, in addition to the torque (the torque for rotating the rotary drum 4 in reverse) according to the potential energy accumulated in the first process, the torque (the torque for rotating the rotary drum 4 in reverse) generated by the motor 12 may be applied to the rotary drum 4, and thus, the reverse rotation of the rotary drum 4 may be promoted.

The controller 15 of the washing machine 1 according to an embodiment of the disclosure may control the motor 12 so that the rotation velocity of the rotary drum 4 is a predefined second rotation velocity when the rotation velocity of the rotary drum 4 reaches a predefined rotation velocity in the second process. According to an embodiment of the disclosure, the controller 15 may initiate a next control after the startup control is ended while the rotation velocity of the rotary drum 4 is set to the second rotation velocity.

In the washing machine 1 according to an embodiment of the disclosure, the controller 15 may repeat the second process in the startup control until an end condition for ending the startup control is satisfied.

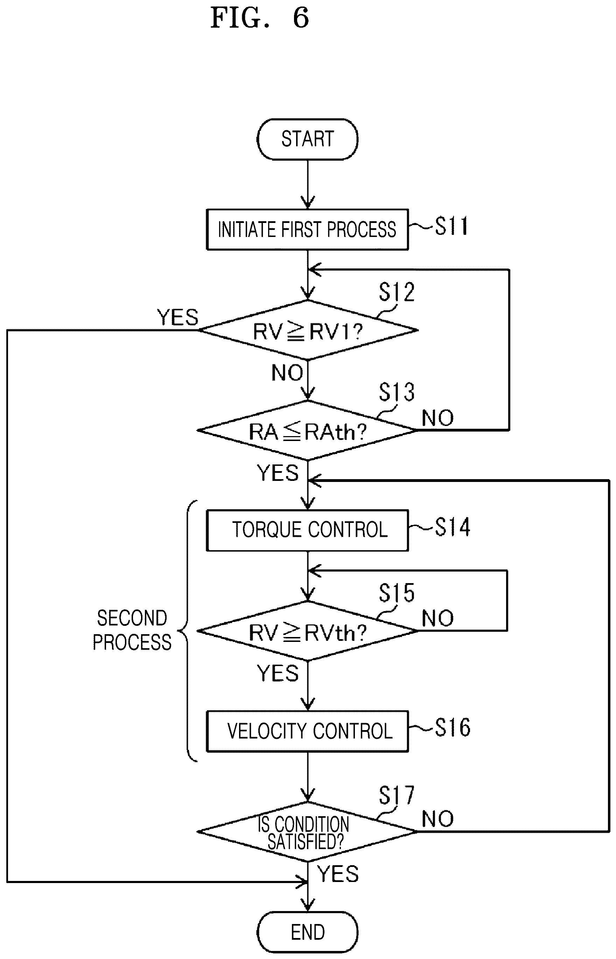

FIG. 6 is a flowchart of a startup control according to an embodiment of the disclosure.

In the startup control according to an embodiment of the disclosure, operation S17 may be performed in addition to operations S11 to S16 of the startup control illustrated in FIG. 4. In an embodiment of the disclosure, operation S17 may be performed after operation S16.

After operation S16 (the velocity control of the second process) is initiated, the controller 15 may determine whether an end condition for ending the startup control is satisfied. When the end condition is not satisfied, operation S14 (the process in the first stage of the second process) may be performed and the rotary drum 4 may rotate in reverse. On the other hand, when the end condition is satisfied, the controller 15 may end the startup control. While the rotation of the rotary drum 4 is maintained, the following control (e.g., the control for the spin-drying process) may be initiated.

In addition, examples of the end condition may include one of a first condition that the number of repetitions of the second process reaches a predefined upper limit number of times, a second condition that the rotation velocity RV of the rotary drum 4 reaches the second rotation velocity RV2 before the rotational acceleration RA of the rotary drum 4 is less than or equal to the threshold RAth after the second process is initiated, and a third condition that the rotation direction of the rotary drum 4 is set to a predefined rotation direction (for example, the rotation direction of the rotary drum 4 predefined in the next control), or any combination thereof.

Specifically, the end condition may be a condition that at least one of the first condition or the second condition is satisfied, may be a condition that the first condition is satisfied, or may be a condition that both the second condition and the third condition are satisfied.

In the washing machine 1 according to an embodiment of the disclosure, the controller 15 may repeat the second process in the startup control until the end condition for ending the startup control is satisfied.

According to an embodiment of the disclosure, the controller 15 may repeat the second process of rotating the rotary drum 4 in reverse by using the torque according to the potential energy accumulated in the rotating system including the rotary drum 4 and the laundry W. By repeating the second process as described above, the potential energy accumulated in the rotating system may gradually increase. Accordingly, the rotation of the rotary drum 4 may be promoted in the startup control.

According to an embodiment of the disclosure, the controller 15 may initiate the second process immediately after the first process is ended, or may initiate the second process after a predefined time has elapsed from the time at which the first process is ended. The predefined time may be 1 second or more.

According to an embodiment of the disclosure, the washing machine 1 may not include the rotation angle sensor 22. In this case, the controller 15 (the processor 16) may estimate the rotation angle of the motor 12, based on information obtained by various sensors (e.g., the current sensor 21) excluding the rotation angle sensor 22. As a method of estimating the rotation angle of the motor 12, a rotation angle estimation method based on a conventional motor sensorless control method may be used. In addition, in the second process, the controller 15 may estimate the rotation angle of the motor 12 at the time at which the second process is initiated, based on the rotation angle of the motor 12 immediately before the second process is initiated (the rotation angle estimated by the estimation process).

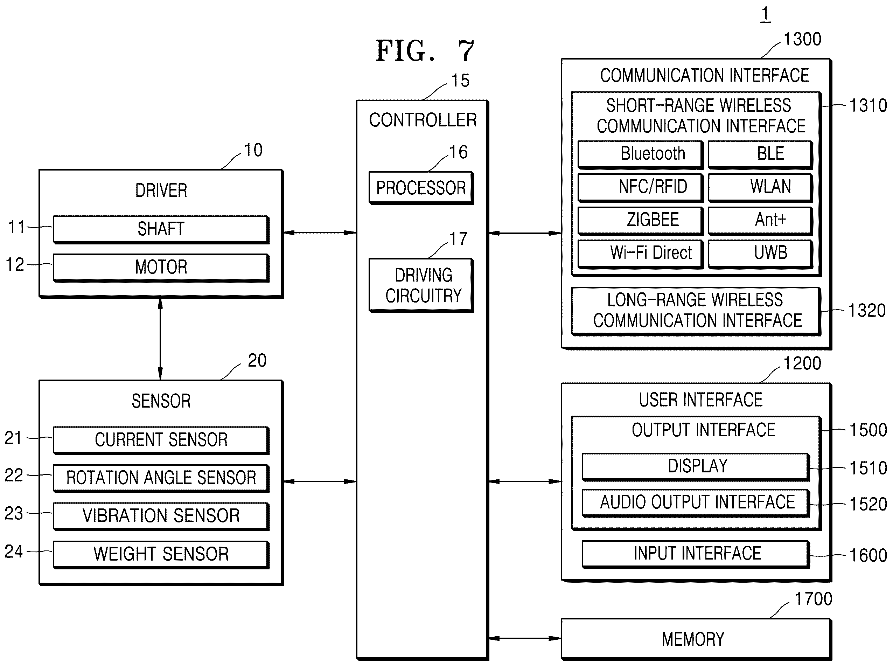

FIG. 7 is a block diagram of a washing machine according to an embodiment of the disclosure.

In the block diagram of FIG. 7, a washing machine 1 according to an embodiment of the disclosure may include a shaft 11, a driver 10 including a motor 12, a controller 15 including a processor 16 and driving circuitry 17, a communication interface 1300, a user interface 1200, memory 1700, and a sensor 20. Not all components of the washing machine 1 are essential, and the components may be added or removed according to the manufacturer's design specifications.

The components are sequentially described below.

The driver 10 may drive the drum of the washing machine 1. The driver 10 may rotate the motor 12 to rotate the shaft 11 connected to the motor 12.

The motor 12 is a rotary body that may be driven by an AC voltage and may be used for washing, rinsing, detangling, and/or spin-drying operations by rotation in the washing machine 1, but the disclosure is not limited thereto.

Because the shaft 11 is connected to the drum, the drum may be rotated by the driving of the driver 10, and laundry put in the drum may be washed, rinsed, detangled, and/or spin-dried.

The controller 15 may control the overall operation of the washing machine 1. The overall operation of the washing machine 1 may be performed by the processor 16 included in the controller 15. The processor 16 may control the driver 10, the communication interface 1300, the user interface 1200, and/or the memory 1700 by executing programs stored in memory (not shown) embedded in the processor 16 and/or the memory 1700. The controller 15 may obtain various physical quantities related to controlling the overall operation of the washing machine 1 through the sensor 20.

The sensor 20 may include one or more sensors. The one or more sensors may include a current sensor 21 that detects a current flowing through the motor 12, a rotation angle sensor 22 that detects the rotation velocity of the rotary drum 4 (the rotation velocity of the motor 12), a vibration sensor 23 that detects vibration of the rotary drum 4, and/or a weight sensor 24 that detects a weight of laundry accumulated in the rotary drum 4.

According to an embodiment of the disclosure, the processor 16 may include an artificial intelligence (AI) processor. The AI processor may be manufactured in the form of a dedicated hardware chip for AI, or may be manufactured as part of an existing general-purpose processor (e.g., central processing unit (CPU) or application processor) or a graphics processing unit (GPU) and mounted on the washing machine 1.

The processor 16 may include the communication interface 1300 so as to operate on an Internet of things (loT) network or a home network when necessary.

The communication interface 1300 may include a short-range wireless communication interface 1310 and a long-range wireless communication interface 1320. The short-range wireless communication interface 1310 may include a Bluetooth communication interface, a Bluetooth Low Energy (BLE) communication interface, a near field communication interface, a Wireless-Fidelity (Wi-Fi) communication interface, a ZigBee communication interface, an Infrared Data Association (IrDA) communication interface, a Wi-Fi Direct (WFD) communication interface, an Ultra Wideband (UWB) communication interface, an Ant+ communication interface, and the like, but the disclosure is not limited thereto. The long-range wireless communication interface 1320 may transmit and receive radio signals to and from at least one of a base station, an external terminal, or a server on a mobile communication network. The radio signals may include voice call signals, video call signals, or various types of data according to text/multimedia message transmission and reception. The long-range wireless communication interface 1320 may include a 3^{rd} generation (3G) module, a 4^{th} generation (4G) module, a 5^{th} generation (5G) module, a long term evolution (LTE) module, and an LTE-M module.

According to an embodiment of the disclosure, the washing machine 1 may communicate with an external server or other electrical devices through the communication interface 1300 and transmit and receive data.

The user interface 1200 may include an output interface 1500 and an input interface 1600.

The output interface 1500 may output audio signals or video signals and may include a display 1510 and an audio output interface 1520.

According to an embodiment of the disclosure, the washing machine 1 may display information related to the washing machine 1 through the display 1510. For example, washing progress information, power factor information, power consumption information, or the like of the washing machine 1 may be displayed on the display 1510.

When the display 1510 and a touch pad are configured as a touch screen having a layer structure, the display 1510 may be used as an input device as well as an output device. The display 1510 may include at least one of liquid crystal display, thin-film transistor-liquid crystal display, light-emitting diode (LED), organic LED, flexible display, three-dimensional (3D) display, or electrophoretic display. The washing machine 1 may include two or more displays 1510 according to the implementation form of the washing machine 1.

The audio output interface 1520 may output audio data received from the communication interface 1300 or audio data stored in the memory 1700. Also, the audio output interface 1520 may output audio signals related to the functions performed by the washing machine 1. The audio output interface 1520 may include a speaker, a buzzer, and the like.

In an embodiment of the disclosure, the input interface 1600 is a component that receives input from a user. The input interface 1600 may be at least one of a key pad, a dome switch, a touch pad (a contact capacitance type touch pad, a pressure resistance film type touch pad, an infrared detection type touch pad, a surface ultrasonic conduction type touch pad, an integral tension measurement type touch pad, a piezo effect type touch pad, etc.), a jog wheel, or a jog switch, but the disclosure is not limited thereto.

The input interface 1600 may include a voice recognition module. For example, the washing machine 1 may receive a voice signal, which is an analog signal, through a microphone, and convert the voice part into computer-readable text by using an automatic speech recognition (ASR) model. The washing machine 1 may obtain a user's utterance intention by interpreting the text by using a natural language understanding (NLU) model. The ASR model or the NLU model may be an AI model. The AI model may be processed by an dedicated AI processor designed with a hardware structure specialized for processing the AI model. The AI model may be made through machine learning. The phase "being made through learning" means that the AI model or the predefined operation rule configured to perform desired characteristics (or purpose) is made in such a manner that a basic AI model is trained by using a large number of training data by a learning algorithm. The AI model may include a plurality of neural network layers. Each of the neural network layers has a plurality of weight values and performs neural network operations through operations between the plurality of weight values and the operation results of the previous layer.

Linguistic understanding is a technology that recognizes, applies, and processes human language and characters, and may include natural language processing, machine translation, dialog system, question answering, and speech recognition/synthesis, and the like.

The memory 1700 may store a program for processing and controlling the controller 15 and may also store input/output data (e.g., washing progress information of the washing machine 1). The memory 1700 may also store the AI model.

The memory 1700 may include at least one type of storage medium selected from flash memory-type memory, hard disk-type memory, multimedia card micro-type memory, card-type memory (e.g., secure digital (SD) or extreme digital (XD) memory), random access memory (RAM), static random access memory (SRAM), read-only memory (ROM), electrically erasable programmable read-only memory (EEPROM), programmable read-only memory (PROM), magnetic memory, magnetic disc, and optical disc. In addition, the washing machine 1 may operate a web storage or a cloud server that performs a storage function on the Internet.

A washing machine according to an embodiment of the disclosure includes a rotary drum which is rotatable and into which laundry is loaded, a motor configured to rotate the rotary drum, and a controller configured to perform startup control to initiate rotation of the rotary drum. According to an embodiment of the disclosure, the controller is further configured to perform a first process for controlling the motor so that, during the startup control, torque for rotating the rotary drum in a first rotation direction is applied to the rotary drum, and a second process for controlling the motor so that, after the first process is initiated, the rotary drum rotates in reverse when a rotational acceleration of the rotary drum is less than or equal to a first predefined threshold before a rotation velocity of the rotary drum reaches a first rotation velocity.

According to an embodiment of the disclosure, the controller is further configured to control the motor so that, in the second process, the rotary drum rotates in a second rotation direction that is a reverse rotation direction of the first rotation direction.

According to an embodiment of the disclosure, the controller is further configured to end the startup control when the rotation velocity of the rotary drum reaches the first rotation velocity.

According to an embodiment of the disclosure, the controller is further configured to end the startup control and not to perform the second process in the first process when the rotation velocity of the rotary drum reaches the first rotation velocity before the rotational acceleration of the rotary drum is less than or equal to the first predefined threshold.

According to an embodiment of the disclosure, the first predefined threshold is the rotational acceleration of the rotary drum when the torque for rotating the rotary drum in the first rotation direction in the first process is not greater than load torque of the rotary drum applied in the reverse direction of the first rotation direction.

According to an embodiment of the disclosure, the controller is further configured to perform torque control so that the torque applied to the rotary drum is a predefined torque value at which the rotary drum rotates in reverse, when the rotational acceleration of the rotary drum is less than or equal to the first predefined threshold before the rotation velocity of the rotary drum reaches the first rotation velocity after the first process is initiated.

According to an embodiment of the disclosure, the predefined torque value is a magnitude that causes the rotary drum to rotate in the second direction.

According to an embodiment of the disclosure, the predefined torque value is a value in a range of 90 % or more of a maximum torque value that is outputtable from the motor.

According to an embodiment of the disclosure, the controller is further configured to perform control so that, when the rotation velocity of the rotary drum in the second process is greater than or equal to the predefined rotation velocity, the rotation direction of the rotary drum is switched to the second rotation direction and the rotation velocity of the rotary drum in the second rotation direction is a second rotation velocity.

According to an embodiment of the disclosure, the controller is further configured to end the startup control when the rotation velocity of the rotary drum reaches the second rotation velocity.

According to an embodiment of the disclosure, the controller is further configured to initiate a control other than the startup control while maintaining the rotation of the rotary drum after the startup control is ended.

According to an embodiment of the disclosure, the controller is further configured to repeat the second process without ending the startup control when the rotation velocity of the rotary drum does not reach the second rotation velocity.

According to an embodiment of the disclosure, the controller is further configured to end the startup control when one of a first condition that, when the rotation velocity of the rotary drum does not reach the second rotation velocity, the second process is repeated without ending the startup control and a number of repetitions of the second process reaches a predefined upper limit number of times, a second condition that the rotation velocity of the rotary drum reaches the second rotation velocity before the rotational acceleration of the rotary drum is less than or equal to a second predefined threshold after the second process is initiated, and a third condition that the rotation direction of the rotary drum is set to a predefined rotation direction is satisfied, or when one of combinations thereof is satisfied.

According to an embodiment of the disclosure, the controller is further configured to initiate the second process after a predefined time has elapsed after the end of the first process.

According to an embodiment of the disclosure, the rotary drum is in a stopped state before the startup control to initiate the rotation of the rotary drum is performed.

A method of controlling a washing machine includes performing a first process for controlling a motor so that, during startup control, torque for rotating a rotary drum in a first rotation direction is applied to the rotary drum, and performing a second process for controlling the motor so that, after the first process is initiated, the rotary drum rotates in reverse when a rotational acceleration of the rotary drum is less than or equal to a first predefined threshold before a rotation velocity of the rotary drum reaches a first rotation velocity.

The method according to an embodiment of the disclosure may be implemented in the form of program commands that are executable through a variety of computer means and may be recorded on a computer-readable recording medium. The computer-readable storage medium may include program commands, data files, data structures, etc. alone or in combination. The program commands recorded on the computer-readable storage medium may be specially designed and configured for the disclosure or may be known and available to those of ordinary skill in the art of computer software. Examples of the computer-readable storage medium may include magnetic media, such as hard disk, floppy disk, and magnetic tape, optical media, such as compact disc read-only memory (CD-ROM) and digital versatile disc (DVD), magneto-optical media, such as floptical disk, and hardware devices specially configured to store and execute program commands, such as ROM, RAM, and flash memory. Examples of the program commands may include not only machine language code generated by a compiler but also high-level language code that is executable using an interpreter by a computer.

An embodiment of the disclosure may also be implemented in the form of a recording medium including instructions executable by a computer, such as a program module executed by a computer. A computer-readable recording medium may be any available media that are accessible by the computer and may include any volatile and non-volatile media and any removable and non-removable media. In addition, the computer-readable recording medium may include a computer storage medium and a communication medium. The computer-readable storage medium may include any volatile, non-volatile, removable, and non-removable media that are implemented in any method or technology for storage of information, such as computer-readable instructions, data structures, program modules, or other data. The communication medium may typically include computer-readable instructions, data structures, program modules, other data of a modulated data signal, such as carriers, or other transmission mechanisms, and may include any information delivery medium. In addition, an embodiment of the disclosure may be implemented as a computer program or a computer program product, which includes instructions executable by a computer, such as a computer program executed by a computer.

A machine-readable storage medium may be provided in the form of a non-transitory storage medium. The non-transitory storage medium is a tangible device and only means not including a signal (e.g., electromagnetic wave). This term does not distinguish between a case where data is semi-permanently stored in a storage medium and a case where data is temporarily stored in a storage medium. For example, the non-transitory storage medium may include a buffer in which data is temporarily stored.

The method according to an embodiment of the disclosure may be provided by being included in a computer program product. The computer program product may be traded between a seller and a buyer as commodities. The computer program product may be distributed in the form of a machine-readable storage medium (e.g., compact disc read-only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or memory of a relay server, or may be temporarily generated.

## Claims

1. A washing machine comprising:
a rotary drum that is rotatable, and into which laundry is loadable;
a motor configured to rotate the rotary drum; and
a controller configured to perform startup control to initiate rotation of the rotary drum, the startup control including:
a first process for controlling the motor so that torque for rotating the rotary drum in a first rotation direction is applied to the rotary drum; and
a second process for controlling the motor so that, after the first process is initiated, and when a rotational acceleration of the rotary drum is less than or equal to a first predefined threshold before a rotation velocity of the rotary drum reaches a first rotation velocity, torque for rotating the rotary drum in reverse is applied to the rotary drum.

2. The washing machine of claim 1, wherein
the controller is configured to control the motor so that, in the second process, the rotary drum rotates in a second rotation direction that is opposite the first rotation direction.

3. The washing machine of claim 1 or claim 2, wherein
the controller is configured to end the startup control when the rotation velocity of the rotary drum reaches the first rotation velocity.

4. The washing machine of any one of claims 1 to 3, wherein
the controller is configured to end the startup control and not perform the second process when, in the first process, the rotation velocity of the rotary drum reaches the first rotation velocity before the rotational acceleration of the rotary drum is less than or equal to the first predefined threshold.

5. The washing machine of any one of claims 1 to 4, wherein
the first predefined threshold is the rotational acceleration of the rotary drum when the torque for rotating the rotary drum in the first rotation direction in the first process is not greater than a load torque of the rotary drum applied in a reverse direction of the first rotation direction.

6. The washing machine of any one of claims 1 to 5, wherein
the controller is configured to perform torque control so that, when the rotational acceleration of the rotary drum is less than or equal to the first predefined threshold before the rotation velocity of the rotary drum reaches the first rotation velocity after the first process is initiated, the torque for rotating the rotary drum in reverse is a predefined torque value.

7. The washing machine of any one of claims 2 to 6, wherein
the predefined torque value is a magnitude that causes the rotary drum to rotate in a second rotation direction that is opposite to the first rotation direction.

8. The washing machine of any one of claims 6 to 7, wherein
the predefined torque value is a value in a range of 90% or more of a maximum torque value that is outputtable from the motor.

9. The washing machine of any one of claims 2 to 8, wherein
the controller is configured to perform control so that, when the rotation velocity of the rotary drum in the second process is greater than or equal to a predefined rotation velocity, the rotation velocity of the rotary drum in the second rotation direction is a second rotation velocity.

10. The washing machine of claim 9, wherein
the controller is configured to end the startup control when the rotation velocity of the rotary drum reaches the second rotation velocity.

11. The washing machine of claim 10, wherein
the controller is configured to initiate a control other than the startup control, while maintaining the rotation of the rotary drum, after the startup control is ended.

12. The washing machine of any one of claims 10 to 11, wherein
the controller is configured to repeat the second process without ending the startup control when the rotation velocity of the rotary drum does not reach the second rotation velocity.

13. The washing machine of any one of claims 9 to 12, wherein
the controller is configured to end the startup control when:
due to the rotation velocity of the rotary drum not reaching the second rotation velocity, the second process is repeated without ending the startup control and a number of repetitions of the second process reaches a predefined number of times,
the rotation velocity of the rotary drum reaches the second rotation velocity before the rotational acceleration of the rotary drum is less than or equal to a second predefined threshold after the second process is initiated, or
a rotation direction of the rotary drum is set to a predefined rotation direction.

14. The washing machine of any one of claims 1 to 13, wherein
the controller is configured to initiate the second process after a predefined time has elapsed after an end of the first process.

15. The washing machine of any one of claims 1 to 14, wherein
the rotary drum is in a stopped state before the startup control to initiate the rotation of the rotary drum is performed.
